Europäisches Patentamt

(19) European Patent Office

Office européen des brevets

(11) Publication number: 0 239 703 B1

# EUROPEAN PATENT SPECIFICATION

(45) Date of publication of patent specification:
05.06.91 Bulletin 91/23

(51) Int. Cl.⁵: **G01F 1/28**

(21) Application number: 86309946.1

(22) Date of filing: 19.12.86

(54) Force-sensitive flow sensor.

(30) Priority: 07.01.86 GB 8600250

(43) Date of publication of application:
07.10.87 Bulletin 87/41

(45) Publication of the grant of the patent:
05.06.91 Bulletin 91/23

(84) Designated Contracting States:
CH DE FR GB IT LI NL SE

(56) References cited:
DE-A- 3 008 441
I.S.A. TRANSACTIONS, vol. 21, no. 1, 1982,
pages 37-44, I.S.A., Research Triangle Park,
NC, US; L.N. KRAUSE et al.: "Miniature drag-
force anemometer"
PROCEEDINGS OF THE IEEE, vol. 70, no. 5,
May 1982, pages 420-457, IEEE; K.E.
PETERSEN: "Silicon as a mechanical ma-
terial"

(56) References cited:
IEEE SPECTRUM, vol. 18, no. 9, September
1981, pages 33-39, IEEE, New York, US; P.W.
BARTH: "Silicon sensors meet integrated cir-
cuits"
INTERNATIONAL CONFERENCE ON SOLID-
STATE SENSORS AND ACTUATORS, 1985,
pages 358-360, IEEE; R.G. JOHNSON et al.:
"Design and packaging of a highly sensitive
microtransducer for air flow and differential
pressure sensing applications"

(73) Proprietor: THORN EMI plc
THORN EMI House Upper Saint Martin's Lane
London, WC2H 9ED (GB)

(72) Inventor. Young, Donald Clifford
105 Fairford Road
Tilehurst Berkshire (GB)

(74) Representative: Fleming, Ian Alexander et al
THORN EMI Patents Limited The Quadrangle
Westmount Centre Uxbridge Road
Hayes Middlesex, UB4 0HB (GB)

EP 0 239 703 B1

## Description ·

This invention relates to a flow sensing device and a circuit suitable for operating such a device.

Known flow measuring devices are bulky and are therefore not easily incorporated into a flow line. They also operate over a limited range of fluid velocity and they are relatively expensive. The output of most of these devices is not compatible with electronic signal processing techniques and so the devices are not readily incorporated into control systems or into modern information systems.

A semiconductor flow sensor employing resistors in the form of a Wheatstone bridge has been studied. Here, one arm of the bridge is heated. (Electronics Letters, 10 (1974) 425-426).

It is an object of the invention to provide a flow sensing device using planar semiconductor structures, the fabrication of which is compatible with the incorporation of electronic processing circuits on the same silicon chip, the sensing device alleviating some of the disadvantages of the prior art sensors.

According to the invention there is provided a flow sensing device comprising a substrate of a semiconductor material fabricated with a micro-engineered cantilever beam, said substrate having a first major surface and an opposite second major surface ;

a channel extending through said substrate from said first major surface to said opposite major surface such that in operation fluid may flow through said channel from said first major surface to said opposite second major surface, and

means which are sensitive to a characteristic of said beam, which characteristic changes with changes in the fluid flow flowing through said channel, so as to be indicative of said fluid flow.

The semiconductor material is preferably silicon. The beam may be made of silicon oxynitride.

The silicon oxynitride may be formed by the reaction between ammonia, silane and nitric oxide at 850°C using atmospheric CVD techniques, and is preferably of refractive index in the range 1.5 to 1.6 and particularly 1.53. Another method of preparing the silicon oxynitride is by using ammonia, silane and nitrous oxide in a low pressure CVD reactor, in which case the refractive index is preferably from 1.8 to 1.9.

The sensitive means of the flow sensing device may include a stress sensor mounted on the beam. Another sensitive means could be responsive to resonant frequency of the beam, or the sensitive means may include heating means for causing a controlled deflection of the beam relative to the substrate and means responsive to a change of that deflection due to cooling by fluid flow relative to the beam.

It is believed that the present invention is capable of providing a device which is more accurate and has a faster response time than the Wheatstone bridge sensor mentioned earlier.

The sensitive means may comprise a capacitive displacement sensor which is responsive to a deflection of the beam relative to the substrate. This sensor may include a first electrode at the free end of the beam and a second electrode on the substrate below the first electrode. Alternatively there may be two second electrodes spaced apart from each other and positioned below the first electrode on the substrate.

A circuit suitable for measuring a capacitance of the capacitive displacement sensor may include a high gain, high impedance amplifier, an input of which, in use, is connected to one terminal of said capacitance, and the output of said amplifier is connected to the input via a feedback capacitor, the other terminal of said capacitance being connected to a source of varying voltage, the output voltage of said amplifier being proportional to the value of the capacitance.

The source of varying voltage preferably provides a pulse or series of pulses which are ideally of equal amplitude. It may be possible to operate with other voltage signals such as sine waves which would again ideally be of constant amplitude. The wording "varying voltage" is therefore intended to include such voltage sources.

The output of the amplifier may be fed to differentiating and integrating circuits to limit the noise band width, rectified and compared with a signal proportional to a particular capacitance value, the output of the comparator being related to the difference between the particular capacitance value and the value of the capacitance being measured.

The capacitance may be variable and is preferably that between a top end contact formed on a micro-engineered cantilevered beam flow sensor fabricated on a semiconductor chip and a bottom end contact on the chip, below the top contact.

The circuit configuration described is particularly useful for measuring small capacitances.

When the beam has an electrode at its free end and there is a second electrode on the substrate below the first electrode, the device may include means for applying an electrostatic force between the electrodes and means for measuring the force necessary to close the electrodes.

In order that the invention may be clearly understood and readily carried into effect, it will be described by way of example with reference to the accompanying drawings, of which :

Figure 1 is a schematic representation of a micro-engineered cantilever flow sensor according to the invention,

2

Figure 2 is a schematic view of the same flow sensor showing fluid incident on the beam,

Figure 3 is a circuit for detecting capacitance changes and hence changes in the flow velocity,

Figure 4A shows a cross-section through a cantilevered beam formed on a semiconductor chip,

Figure 4B shows a beam as for the present invention with a channel e.g. an air way through the substrate, and

Figures 5A, 5B, 5C and 5D schematically represent stages in a preferred method of fabrication of beam end contacts.

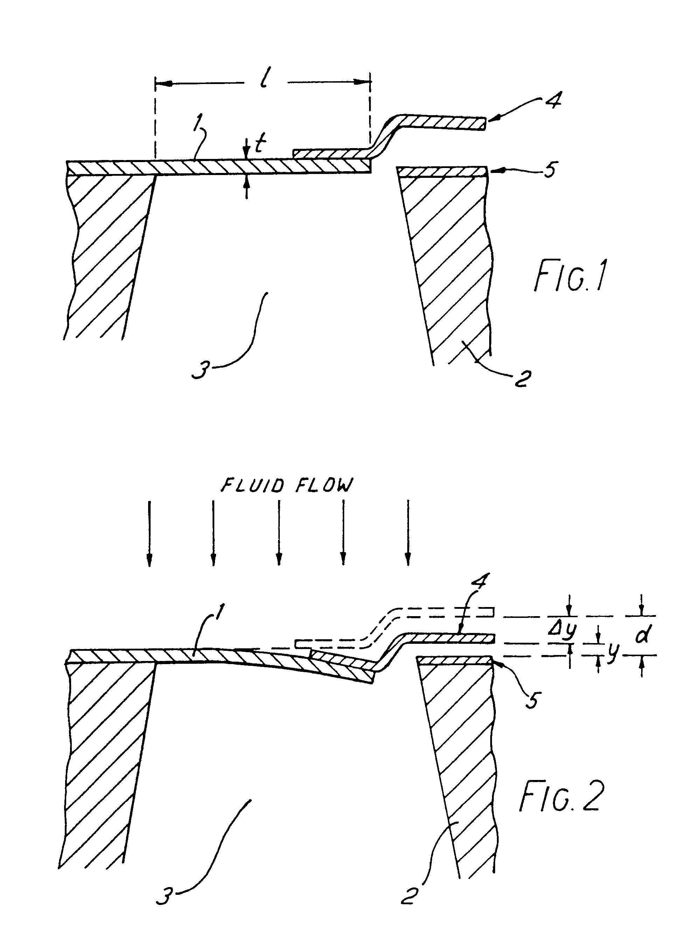

Referring first to Figures 1 and 2, these show a flow sensor comprising a micro-engineered cantilevered beam 1 constructed on a planar substrate of semiconductor material 2. The semiconductor material is preferably silicon. The beam may be made of a metal, an insulating material, or the semiconductor material itself.

The semiconductor substrate can also be used to fabricate electronic signal processing circuitry to be associated with the beam.

Figures 1 and 2 show capacitive sensing means, including an electrical contact 4 which is formed on the free end of the beam. This acts as one electrode of a capacitor. The other capacitor electrode 5 is fabricated directly below this and can be either insulated from the substrate or part of it. Measuring the change in capacitance between the electrodes as the beam deflects gives an indication of the deflection of the beam and hence the fluid velocity. The beam end contact 4 could also vary the capacitance between two electrodes constructed beneath it with a gap between them. In this case, the charge coupled into one lower contact from the other lower contact can be detected and depends upon capacitance between the two lower contacts and the upper contact. This method does not require a metal strip running along the beam to its end contact 4. A suitable material for the electrodes is gold, due to its resistance to oxidation and to its resistance to chemical etches that normally attack other metals, but other metals, e.g. nickel (which is harder), could be used.

Alternatively, a film could be placed on the beam which would measure stress as the beam was bent. An example of a material which could be used for such a film is the piezoelectric material ZnO.

Beneath the beam is a channel 3 extending through the semiconductor substrate from the first major surface of the substrate on which the beam is fabricated to the opposite major surface of the substrate. This can be made by anisotropically etching the semiconductor material from the side of the chip opposite to the beam, a method which involves double-sided masking techniques, but other methods may also be suitable. If, for example, a V-shaped groove or flat-bottomed well was fabricated beneath the beam as is usual in the fabrication of cantilevers, such as that known from the paper entitled, "A Batch-Fabricated Silicon Accelerometer" (Roylance, L.M. and Angell, J.B., IEEE Trans., Vol. ED26, No. 12, 1979, p. 1911), fluid incident on the beam would build up a pressure in the well which eventually would cancel out the force on the beam due to the fluid flow, so that the device would not respond sufficiently to variation in the fluid flow rate. Also the geometrical dimensions required for a beam fabricated for use as a flow sensor differ from those for beams used as accelerometers.

If the beam is placed in a fluid flow such that the fluid is incident on it as indicated in Figure 2 the fluid exerts a force on the beam and causes it to deflect as shown, the amount of deflection depending on the fluid velocity.

If a force p is acting on an area of the beam defined by beam width b and a small element $\delta x$ from its length so that the total force on that area is pb $\delta x$, then the beam will deflect by an amount described by :

$$\delta = \frac{x^2}{6EI} (31 - x)pb\, \delta x \quad (1)$$

where 1 is the length of the beam, E is Young's modulus, and I is moment of inertia of the beam given by :

$$I = \frac{bt^3}{12} \quad (2)$$

where t is beam thickness.

Since the force is acting along the entire length of the beam, total deflection of the tip is calculated by integrating (1) from 0 to 1.

$$\Delta y = \frac{bp}{6EI} \int_o^1 (31 - x)x^2 dx$$

The force due to the air flow is $\frac{1}{2}\rho v^2 C_d$, where $\rho$ is density of fluid, v is fluid velocity and $C_d$ is drag coefficient, hence

EP 0 239 703 B1

$$\Delta y = \frac{b\rho v^2 l^4 C_d}{16EI}$$

Substituting (2) for I,

$$\Delta y = \frac{\rho l^4 v^2 C_d}{1.3 t^3 E} \qquad (3)$$

In the above treatment, any electrostatic force due to an electronic circuit attached to the beam imposing a voltage across its end contacts is assumed to be negligible.

The range of fluid velocities which the beam will cover can be varied by altering t and l. Several beams with different values of l can be incorporated on the same chip to cover a wider range of velocities. When a particular beam "bottoms" (i.e. top contact meets bottom contact), the stress is at the fixed end of the beam and on the beam contact 4. A beam designed to "bottom" at one particular flow velocity (e.g. 10 cm/s) can be designed so that it will not break at a higher velocity (e.g. 800 cm/s) and so a range of flow velocities can be covered if, once a beam "bottoms", the circuit switches to another beam.

The amount of deflection $\Delta y$ (as indicated in Figure 2) can be determined by measuring the change in capacitance between the beam end contact and the lower contact.

In accordance with the present invention, the increase in capacitance $\Delta C$ between the beam and substrate contact due to deflection of the beam is given by

$$\Delta C = \frac{1.1 \times 10^{-12} A}{4\pi(d-\Delta y)} - C_o \qquad \text{farads}$$

where A is contact area, d is undeflected beam spacing, $\Delta y$ is deflection of beam and $C_o$ is capacitance of beam with zero deflection,

$$C_o = \frac{1.1 \times 10^{-12} A}{4\pi d} \qquad \text{farads}$$

The fluid velocity corresponding to a value of $\Delta y$ is given by Equation (3).

Other micro-engineered devices which use a capacitance change to sense a change in a physical parameter are known. These include an accelerometer described in the paper "Micromechanical Accelerometer Integrated with MOS Detection Circuitry "(Petersen, K.E. et al., IEEE Trans., Vol ED29, No. 1, 1982, p.23) and a pressure transducer described in "Capacitive Pressure Transducers with Integrated Circuits" (Ko, W.H. et al, Sensors and Actuators, Vol. 4, No. 3, 1983, p.403). Circuits used for these devices include capacitance bridges (e.g. in Petersen et al) which suffer from low sensitivity due to problems in coupling the beam end contacts to the bridge, and oscillator circuits where the capacitance controls the circuit frequency (as described in "Monolithic Capacitive Pressure Sensor with Pulse-Period Output", Sander, C.S. et al, IEEE Trans., Vol ED 27, No. 5, 1980, p.927). Quad diode circuits have also been used but these also present severe fabrication problems (Ko et al).

Considering a beam of silicon oxynitride of refractive index 1.53, 20 μm long by 50 μm wide, contact area $A = 10^{-9} m^2$, beam spacing 50 μm, beam length = 2mm,
$\rho = 1.2 \times 10^{-3}$ g cm$^{-3}$ (for nitrogen)
Young's modulus for this beam material = $7 \times 10^{10}$ Pa,
beam thickness = 0.2 μm,
a calculation of $\Delta C$ for a 2 mm long beam gives $\Delta C = 1.8 \times 10^{-15}$ F for a 1 cms$^{-1}$ gas velocity.

A velocity range of for example 0.8 cms$^{-1}$ to 570 cms$^{-1}$ could be covered by a plurality (e.g. 5) of micro beams on the same chip.

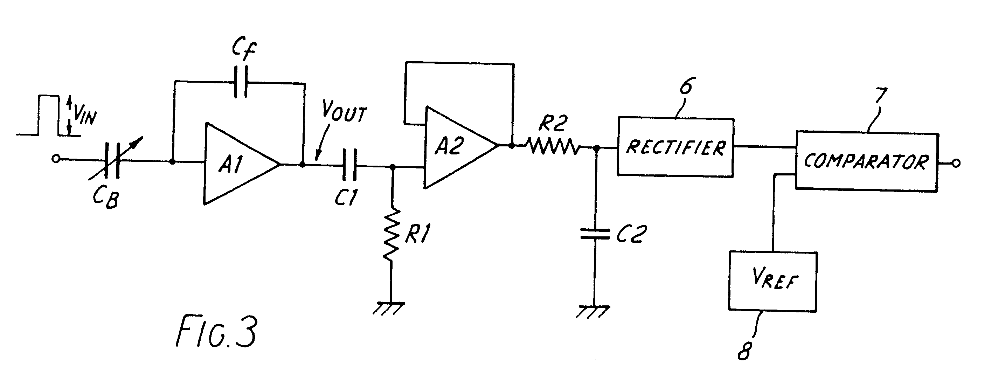

For the micro-engineered flow sensor according to the present invention, a circuit technique using a charge-sensitive configuration may be used, an example of which is the circuit shown in Figure 3.

4

This charge-sensitive configuration overcomes problems arising when using prior art circuits, these problems being non-linearity, small range of applications and low signal-to-noise ratio.

In Figure 3, the amplifier A1 is used in a charge-sensitive mode where the output voltage of A1 is given by :

$$V_{out} = \frac{V_{IN}C_B}{C_f}$$

where $C_f$ is the feedback capacitance, $C_B$ is the capacitance between the beam end contact and the lower contact and $V_{IN}$, the input voltage. $V_{IN}$ may be provided by a pulse generator. Rectangular wave pulses are particularly suitable for use with the beam and may be supplied singly or in a series. Other wave forms such as sine waves may be found to be appropriate especially in other applications. The input waveform should be of constant amplitude.

The pulse generator may be integrated on the same silicon chip as the amplifier and beam.

$V_{out}$ is rectified via rectifier 6 and fed to one input of a comparator 7, the voltage $V_{REF}$ (8) at the other input being that when the beam is undeflected so that the output of the comparator is directly proportional to the capacitance change.

In the circuit shown in Figure 3, A2 is a buffer amplifier, C1 and R1 form a differentiator and R2 and C2 form an integrator. These limit the noise bandwidth so that a signal is produced at a frequency above the $1/_f$ noise of active devices in the circuit. The signal to noise ratio may be increased in this way.

A further advantage of this method of signal processing over many others is that the width of $V_{IN}$ can be made much smaller than the response time of the beam, hence the electrostatic force due to $V_{IN}$ does not affect the beam response (which is important if we are using the treatment described earlier) and $V_{IN}$ can be made large for greater sensitivity.

Another advantage of the invention is that to measure the small capacitance changes presented by the deflection of the beam (capacitance changes of the order of $10^{-15}F$), the measurement circuit can be incorporated on the same chip as the flow sensor. The minimum change in capacitance which can be measured will be limited by the electronic noise of the measuring circuit.

Variations on the circuit described above will be obvious to a skilled person.

Putting the circuit on the same chip as the beam produces minimum noise and maximum resolution.

The circuit technique can also be used with a flow sensor having one top contact at the end of the beam and two lower contacts with a gap between them, to determine the charge coupled into one lower contact from the other lower contact.

Deflection of the beam may also be determined using strain gauge techniques.

Another method of detecting fluid flow by measuring deflection of the beam is to use a hot beam sensor. An electrically conductive strip may be placed along the top of the beam, for example by evaporation of metal onto the beam. If the contact strip is heated by passing a current through it, this also heats the beam and the different coefficients of expansion of the metal strip and the beam material will cause the beam to bend. If the fluid flow is essentially parallel to the beam so that deflection of the beam due to the fluid flow can be ignored, the capacitance between the beam end contacts depends on the deflection of the beam and hence on the beam temperature and the rate of cooling of the beam depends on the velocity of fluid flow (e.g. air flow) past the beam. The temperature of the beam will reach an equilibrium value dependent upon heat input and rate of cooling and the change in deflection caused by cooling (decrease in deflection) depends on the fluid velocity. (Variations on this method are of course possible).

It is also possible to determine fluid flow velocity by measurement of the maximum switching voltage of the beam. If the fluid flow is normal to the beam, the force on the beam is proportional to the fluid velocity squared (i.e. the beam will deflect by an amount proportional to the fluid velocity squared). If a D.C. voltage is applied between the top and bottom contacts of the beam, for a given fluid force a particular voltage will cause the beam contacts to shut. (The D.C. potential provides a further electrostatic force between the two contacts.) Increasing the fluid force requires a smaller electrostatic force and hence a smaller voltage to cause the beam to switch. The maximum voltage needed to cause the contacts to close is proportional to the electrostatic force and hence to the fluid velocity squared.

Optical techniques may also be used to measure the fluid velocity. For example, a light signal from an LED could be taken to and from the micro-beam sensor via an optic fibre. An advantage of this system is that only the flow sensor and a fibre are in the fluid stream.

In the discussion in the present specification, when it is stated that the deflection of the beam etc. is dependent on the fluid velocity, this assumes that the fluid is of constant density and that in a particular case, the other variables in expression (3) are of fixed values. In practice, the density of the fluid will not be constant (due to fluctuations in temperature etc.) and the deflection of the beam will actually be dependent on the mass

EP 0 239 703 B1

flow of the fluid. It is intended that such cases are within the scope of the present invention.

An alternative to measurement of the deflection of the beam due to the fluid flow is to direct the flow so that it is incident on the beam and to use the beam as a flow sensor in its resonant frequency mode whereby resonant frequency varies with fluid velocity. The beam tends to oscillate, given suitable excitation.

The resonant frequency mode can have operational advantages. For example, the resonant frequency of the beam is at a maximum at zero fluid velocity and this fact can be used to calibrate the beam characteristics. This self-calibration would enable compensation to be applied automatically in the processing circuit for any change in beam characteristics such as Young's modulus of elasticity whilst the beam is in use.

To operate in the resonant frequency mode, the response of the beam due to three forces, namely the force due to the fluid velocity, an electrostatic force due to a potential difference between the beam end contacts imposed by an electronic circuit attached to them, and the restoring force provided by the beam when it is bent are considered.

The equation of motion for a beam deflected from its equilibrium position by an amount $\Delta y$ when it is subject to all the forces described above is :

$$m\ \frac{d^2\Delta y}{dt^2}\ =\ \frac{1}{2}\ \frac{\varepsilon_o A' V_p^{\ 2}}{4\pi y^2}\ +\ \frac{\rho v^2 A}{5.32}\ -\ K(d-y)$$

$$\underset{\text{force}}{\text{electrostastic}}\qquad \underset{\text{fluid velocity}}{\text{force due to}}\qquad \underset{\text{force}}{\text{restoring}}$$

where

$$K\ =\ \frac{Et^3 b}{4l^3}\ ,$$

$\rho$ is gas density, v is gas velocity, A is area of beam plus end contact, $V_p$ is voltage applied between beam top and bottom contacts, A' is area of beam end contacts, $\varepsilon_o$ is permittivity of free space, y is spacing between end contacts after deflection, E is Young's modulus, t is beam thickness, b is beam width, l is length of beam.

The acceleration per unit displacement

$$=\ \frac{1}{m}\ \left(\ K\ -\ \frac{\varepsilon_o A' V_p^{\ 2}}{4\pi y^3}\ \right)$$

and resonant frequency

$$=\ \frac{1}{2\pi m^{\frac{1}{2}}}\ \left(\ K\ -\ \frac{\varepsilon_o A' V_p^{\ 2}}{4\pi y^3}\ \right)^{\frac{1}{2}}$$

The resonant frequency varies with fluid velocity through y if the correct balance is achieved between beam restoring force and electrostatic force applied to the beam (see (1) where $\Delta y = d - y$)

It may be necessary, when considering the resonant frequency mode, to take damping factors such as fluid viscosity into account. Measurement of changes in resonant frequency could be, for example, by capacitive or piezoresistive means.

In order to fabricate the flow sensing device, a suitable method is to use Ethylene Diamine Pyrocatechol (E.D.P.) as an etch for single crystal silicon, but other etches can be used.

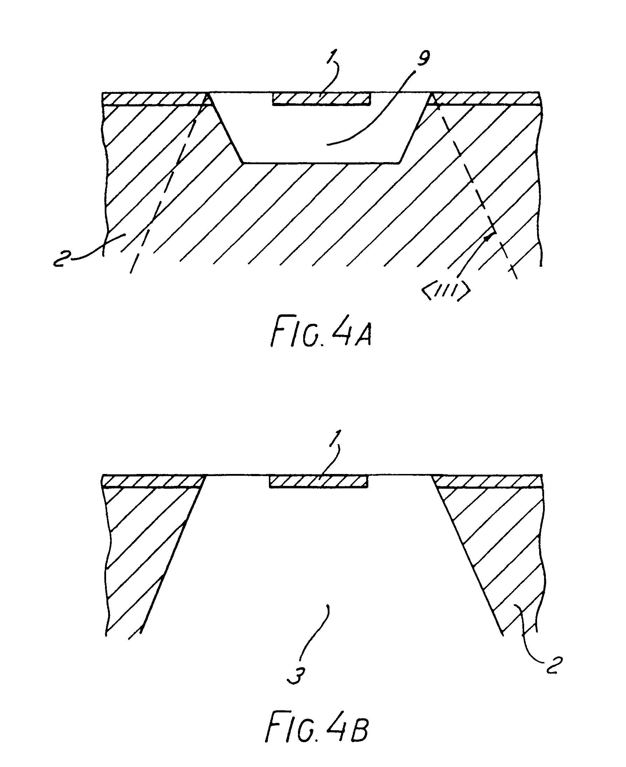

Figure 4A shows a cross-sectional end view of a beam 1 formed on a semiconductor chip 2 having a well 9 beneath it. The semiconductor material is preferably silicon. Methods of fabricating such a beam are well known.

Figure 4B shows a micro-engineered cantilevered beam with a channel in the form of an air way 3 through

6

the chip, as in the present invention. The channel can be formed by anisotropic etching of the chip for example using the <111> planes to define the geometry. The <111> planes are shown dotted in Figure 4A.

Other methods of making the channel are possible.

Thermally grown silicon dioxide may be used as a diffusion mask in the processing of the integrated circuit constructed on the same chip as the sensor, and also as the gate insulator for the MOSFETs used in the circuit. Other materials are however suitable and will be known to a person skilled in the art.

Silicon oxynitride (a material which is not usually used in integrated circuit fabrication) is a particularly suitable material for the beam although silicon dioxide and silicon nitride may be suitable for some purposes. With silicon oxynitride beams, the present inventor has found that the geometrical constraints defined by Jolly due to the difference in thermal expansion properties of the beam material and underlying silicon (Jolly, R.D., Muller, R.S., J. Electrochem Soc., Solid State Science and Technology, Dec. 1980, p. 2750) can be exceeded by 500%. A suitable composition of silicon oxynitride, to produce beams showing negligible stress, is of refractive index 1.53 and formed from the reaction between ammonia, silane and nitric oxide at 850°C, but other compositions and reactions are possible, as mentioned earlier.

Figures 5A to 5D illustrate a preferred method of fabrication of the end contacts. Figure 5A shows a silicon substrate 2 (which is preferably p+ doped), a silicon oxynitride beam 1 and a bottom end contact 5. The metallisation consists of chromium (for sticking purposes), overlaid with gold (which provides a good conducting path).

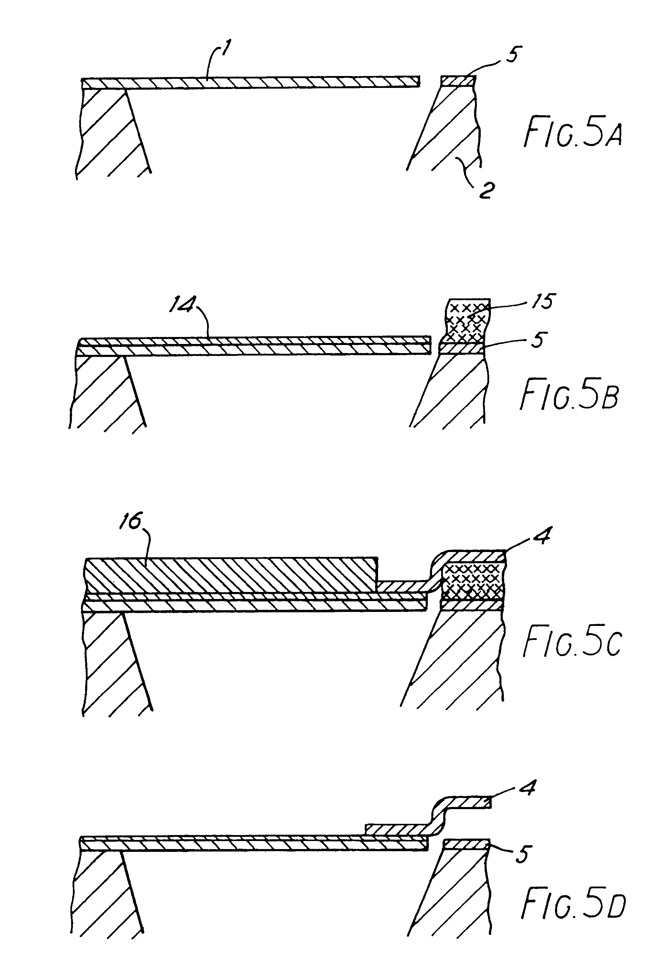

A spacer 15 as shown in Figure 5B may be formed by spinning thick resist (about 5 µm thick) onto the slice and using a photo-lithographic process to define the spacer and a beam contact layer 14 of nichrome gold is deposited on the beam. A bake is performed to achieve a suitable edge profile which can be covered with a metal with no breaks. To make electrical contact to the spacer for plating purposes, a temporary conducting path must be laid down from the slice edge to every spacer area. The metal used must be selectively etched after plating as it necessarily covers part of the existing metallisations. Copper is a suitable metal that can be etched without affecting the gold-chrome layer.

Following copper deposition, gold is deposited on top of the copper. This gold provides a good plating and also ensures that the gold plated parts have well defined edges, because of good resist to gold adhesion.

Resist 16 is spun onto the slice after the gold deposition as shown in Figure 5C and the beam top contact area is defined by a photo-lithographic process. Gold is then electrolytically plated (to a thickness of about 3 µm).

The top resist layer is removed and the gold plating layer is removed by ion milling. When copper is revealed, the copper is removed using a selective etch. Then the resist spacer is removed leaving the gold end contact 4 (typically 5 µm) above the gold-chrome lower contact, as shown in Figure 5D.

Alternatively, the contacts may be fabricated by first forming a bottom contact (e.g. chromium overlaid with gold) on the semiconductor substrate, electrolytically depositing silver (rather than photoresist) as a blocking material over the bottom contact to the thickness required for the contact spacing, forming the top contact on the free end of the beam and then etching away the silver.

Other methods of fabrication of end contacts are also possible.

A flow sensor according to the invention fabricated using silicon planar processing techniques has the associated advantages of low cost, small size and the possibility of incorporation of measurement circuits on the same chip as the sensor.

The invention is not restricted to the materials or fabrication methods specifically mentioned.

The invention may be useful in the automobile industry, for measuring a flow of fluids, such as exhaust gases or fuel.

## Claims

1. A flow sensing device comprising :
   a substrate of a semiconductor material fabricated with a micro-engineered cantilever beam, said substrate having a first major surface and an opposite second major surface ;
   a channel extending through said substrate from said first major surface to said opposite major surface such that in operation fluid may flow through said channel from said first major surface to said opposite second major surface, and
   means which are sensitive to a characteristic of said beam, which characteristic changes with changes in the fluid flow flowing through said channel, so as to be indicative of said fluid flow.

2. A flow sensing device according to Claim 1 in which the beam is made of silicon oxynitride.

3. A flow sensing device according to Claim 1 or Claim 2 in which said sensitive means comprises a capacitive displacement sensor responsive to a deflection of the beam relative to the substrate.

4. A flow sensing device according to Claim 3 in which said capacitive displacement sensor includes a first electrode at the free end of the beam and a second electrode positioned on said substrate below said first electrode.

5. A flow sensing device according to Claim 3 in which the capacitive displacement sensor includes a first electrode at the free end of the beam and two second electrodes which are spaced apart from each other and are positioned below the first electrode on the substrate.

6. A flow sensing device according to Claim 3 including a circuit arrangement for measuring a capacitance of said capacitive displacement sensor, the circuit including a high gain, high impedance amplifier, an input of which, in use, is connected to one terminal of said capacitance, and the output of said amplifier is connected to the input via a feedback capacitor, the other terminal of said capacitance being connected to a source of varying voltage, the output voltage of said amplifier being proportional to the value of the capacitance.

7. A flow sensing device according to Claim 1 or Claim 2 in which the sensitive means include a stress sensor mounted on the beam.

8. A flow sensing device according to Claim 1 or Claim 2 in which the sensitive means is responsive to resonant frequency of the beam.

9. A flow sensing device according to Claim 1 or Claim 2 in which the sensitive means includes heating means for causing a controlled deflection of the beam relative to the substrate, and means responsive to a change of that deflection due to cooling by fluid flow relative to the beam.

10. A flow sensing device according to Claim 4 including means for applying an electrostatic force between the electrodes, and means for measuring the force necessary to close the electrodes.

## Ansprüche

1. Strömungssensor-Vorrichtung umfassend :
Ein Substrat aus einem Halbleiter-Material mit einem in Mikro-Bauweise hergestellten Ausleger, wobei das Substrat eine erste Hauptfläche und eine gegenüberliegende zweite Hauptfläche besitzt ;
einen durch das Substrat von der ersten Hauptfläche zur gegenüberliegenden Hauptfläche derart verlaufenden Kanal, daß im Betrieb ein Fluid durch den Kanal von der ersten Hauptfläche zur gegenüberliegenden zweiten Hauptfläche strömen kann, und
Mittel, die auf eine Eigenschaft des Auslegers ansprechen, wobei die Eigenschaft sich mit Änderungen der Fluidströmung ändert, die durch den Kanal strömt, um so die Fluidströmung anzuzeigen.

2. Strömungssensor-Vorrichtung nach Anspruch 1, bei der der Ausleger aus Siliziumoxynitrid hergestellt ist.

3. Strömungssensor-Vorrichtung nach Anspruch 1 oder 2, bei der die Ansprechmittel aus einem kapazitiven Auslenksensor bestehen, der auf die Auslenkung des Auslegers relativ zum Substrat anspricht.

4. Strömungssensor-Vorrichtung nach Anspruch 3, bei der der kapazitive Auslenksensor eine erste Elektrode am freien Ende des Auslegers und eine zweite Elektrode auf dem Substrat unterhalb der ersten Elektrode aufweist.

5. Strömungssensor-Vorrichtung nach Anspruch 3, bei der der kapazitive Auslenksensor eine erste Elektrode am freien Ende des Auslegers und zwei zweite Elektroden aufweist, die einen Abstand voneinander haben und auf dem Substrat unterhalb der ersten Elektrode angeordnet sind.

6. Strömungssensor-Vorrichtung nach Anspruch 3 mit einer Schaltungsanordnung zur Messung einer Kapazität des kapazitiven Auslenksensors, wobei die Schaltung einen Verstärker mit hohem Gewinn und hoher Impedanz aufweist, von dem im Betrieb ein Eingang mit einer Anschlußklemme der Kapazität verbunden ist und von dem der Ausgang mit dem Eingang über einen Rückkopplungs-Kondensator verbunden ist, während die andere Anschlußklemme der Kapazität mit einer Quelle mit sich ändernder Spannung verbunden ist, wobei die Ausgangsspannung des Verstärkers proportional zu dem Wert der Kapazität ist.

7. Strömungssensor-Vorrichtung nach Anspruch 1 oder 2, bei der die Ansprechmittel aus einem auf dem Ausleger angebrachten Beanspruchungssensor bestehen.

8. Strömungssensor-Vorrichtung nach Anspruch 1 oder 2, bei der die Ansprechmittel auf die Resonanzfrequenz des Auslegers ansprechen.

9. Strömungssensor-Vorrichtung nach Anspruch 1 oder 2, bei der die Ansprechmittel aus Heizmitteln bestehen, um eine kontrollierte Auslenkung des Auslegers relativ zum Substrat zu bewirken, und wobei Mittel vorgesehen sind, die auf eine Änderung der Auslenkung als Folge einer Abkühlung durch eine Fluidströmung relativ zum Ausleger ansprechen.

10. Strömungssensor-Vorrichtung nach Anspruch 4 mit Mitteln zur Errichtung einer elektrostatischen Kraft zwischen den Elektroden und mit Mitteln zur Messung der Kraft, die notwendig ist, um die Elektroden zu schließen.

**Revendications**

1. Dispositif de captage de débit comprenant :
un substrat en matériau semiconducteur, fabriqué de façon à comprendre une poutre en porte-à-faux micro-incorporée, le substrat comprenant une première surface principale ainsi qu'une seconde surface principale opposée ;
un canal qui s'étend au travers du substrat depuis la première surface principale jusqu'à la surface principale opposée de telle sorte que, lors du fonctionnement, un fluide puisse s'écouler au travers du canal depuis la première surface principale jusqu'à la seconde surface principale opposée ; et
un moyen qui est sensible à une caractéristique de la poutre, cette caractéristique variant lorsque le débit du fluide qui s'écoule au travers du canal varie, de manière à être représentatif du débit du fluide.

2. Dispositif de captage de débit selon la revendication 1, dans lequel la poutre est réalisée en oxynitrure de silicium.

3. Dispositif de captage de débit selon la revendication 1 ou 2, dans lequel le moyen sensible comprend un capteur de déplacement capacitif qui est sensible à un fléchissement de la poutre par rapport au substrat.

4. Dispositif de captage de débit selon la revendication 3, dans lequel le capteur de déplacement capacitif comporte une première électrode située au niveau de l'extrémité libre de la poutre ainsi qu'une seconde électrode positionnée sur le substrat, au-dessous de la première électrode.

5. Dispositif de captage de débit selon la revendication 3, dans lequel le capteur de déplacement capacitif comporte une première électrode située au niveau de l'extrémité libre de la poutre ainsi que deux électrodes qui sont espacées l'une de l'autre et qui sont positionnées au-dessous de la première électrode, sur le substrat.

6. Dispositif de captage de débit selon la revendication 3 comprenant un arrangement de circuit destiné à mesurer une capacité du capteur de déplacement capacitif, le circuit comprenant un amplificateur à gain et à impédance élevés dont une entrée est connectée lors du fonctionnement à une borne de la capacité et dont la sortie est connectée à l'entrée par l'intermédiaire d'une capacité de rétroaction, l'autre borne de la capacité étant connectée à une source de tension variable, la tension de sortie de l'amplificateur étant proportionnelle à la valeur de la capacité.

7. Dispositif de captage de débit selon la revendication 1 ou 2, dans lequel le moyen sensible comporte un capteur de contrainte monté sur la poutre.

8. Dispositif de captage de débit selon la revendication 1 ou 2, dans lequel le moyen sensible est sensible à la fréquence de résonance de la poutre.

9. Dispositif de captage de débit selon la revendication 1 ou 2, dans lequel le moyen sensible comporte un moyen de chauffage pour provoquer un fléchissement contrôlé de la poutre par rapport au substrat ainsi qu'un moyen sensible à une modification de ce fléchissement dûe à un refroidissement par un écoulement de fluide qui s'effectue au niveau de la poutre.

10. Dispositif de captage de débit selon la revendication 4 comportant un moyen pour appliquer une force électrostatique entre les électrodes ainsi qu'un moyen pour mesurer la force nécessaire pour fermer les électrodes.

*FIG.1*

FLUID FLOW

*FIG.2*

Fig. 3

FIG. 4A

FIG. 4B

FIG.5A

FIG.5B

FIG.5c

FIG.5D